# EUROPÄISCHE PATENTSCHRIFT

(11) **EP 2 708 398 B1**
(45) Veröffentlichungstag und Bekanntmachung des Hinweises auf die Patenterteilung: **01.01.2020**
(21) Anmeldenummer: 13183571.2
(22) Anmeldetag: 09.09.2013
(51) Int. Cl.: B60J 7/20, B60J 7/185

(54) **Kinematik für eine Klappe**
Kinematics for a flap
Cinématique pour un clapet

(30) Priorität: 14.09.2012 DE 102012216427
(43) Veröffentlichungstag der Anmeldung: 19.03.2014
(73) Patentinhaber: Magna Car Top Systems GmbH, 74321 Bietigheim-Bissingen (DE)
(72) Erfinder: Bruder, Gernot, 76131 Karlsruhe (DE); Kostadinov, Metodi, 74321 Bietigheim-Bissingen (DE); Mangold, Artur, 72172 Sulz-Mühlheim (DE)
(74) Vertreter: Rausch, Gabriele

(56) Entgegenhaltungen:
- EP-A1- 2 006 140
- DE-A1-102004 018 905
- DE-A1-102009 050 497
- US-A1- 2005 248 177

## Beschreibung

### Gebiet der Erfindung

Die vorliegende Erfindung betrifft eine Anordnung einer Fahrzeugklappe, insbesondere eines Verdeckkastendeckels.

### Stand der Technik

Eine gattungsgemäße Vorrichtung ist beispielsweise aus der EP1318041B1 Art bekannt. Bei diesem System wird ein sich hin und her bewegender erster Gleiter, der zum Entriegeln, Verriegeln der Fahrzeugklappe eine Verriegelungsmechanik betätigt, und einen in dem ersten Gleiter hin und her beweglichen zweiten Gleiter aufweist, der zum Öffnen, Schließen der Fahrzeugklappe direkt oder indirekt an der Fahrzeugklappe angelenkt ist. Dabei ist zumindest die Hauptbewegungsrichtung des ersten Gleiters und des zweiten Gleiters vorzugsweise im Wesentlichen parallel.

Bei der genannten Anwendung werden zumindest zwei Gleiter, die in Führungsschienen oder dergleichen geführt werden müssen, verwendet. Diese werden über Antriebskabel, Zahnräder und/oder Zahnstangen, Riemen, Lenker und dergleichen angetrieben.

Andere gattungsgemäße Vorrichtungen sind beispielsweise aus der DE 10 2004 018905 A1 und der DE 10 2009 050497 A1 bekannt.

### Zusammenfassung der Erfindung

Es ist eine Aufgabe der Erfindung, eine Anordnung der genannten Art zu verbessern, so dass die Anordnung mit wesentlich weniger Bauteilen auskommt und eine Reduktion der Komplexität bei gleichzeitig erhöhter Zuverlässigkeit des Gesamtsystems erreicht wird.

Die Lösung der Aufgabe erfolgt durch eine Anordnung zum Öffnen, Schließen, Entriegeln und Verriegeln einer Fahrzeugklappe gemäß Anspruch 1, wobei ein Antriebslenker einer Aktuierungskinematik an einer Klappenkinematik angreift, wobei ein Umlenkhebel der Aktuierungskinematik von einem Aktuator antreibbar ist und bei einer Schließbewegung in ein Eingriffselement der Klappenkinematik oder der Fahrzeugklappe eingreift und diese dabei schließt und verriegelt, wobei der Umlenkhebel in einer Übertotpunktlage zum Antriebslenker steht.

Im Stand der Technik ist bisher für das Öffnen und Schließen sowie für das Entriegeln und Verriegeln einer Fahrzeugklappe jeweils eine Aktuatorik erforderlich. Durch das Angreifen der Antriebskinematik an die Klappenkinematik wird erreicht, dass man mit nur einer Aktuatorik die Fahrzeugklappe gleichzeitigen Öffnen, Schließen, Entriegeln und Verriegeln kann, und dabei bei gleichzeitiger Verringerung von sonst erforderlichen Bauteilen die Zuverlässigkeit des Bewegungsablaufes zu erhöhen, wobei aufgrund der Ausführung der Anordnung die Reibung im System wesentlich reduziert und die Übertragung der Kräfte in jeder Arbeitsstellung gewährleistet wird.

Die Anordnung umfasst im Wesentlichen eine Fahrzeugklappe und ein Mehrgelenksystem, welches eine Aktuierungskinematik und eine Klappenkinematik umfasst. Die Anordnung weist auch einen Verriegelungsmechanismus auf sowie eine Aktuatorik zum Antreiben der Aktuierungskinematik, welche die Klappenkinematik betätigt.

Weiterbildungen der Erfindung sind in den abhängigen Ansprüchen, der Beschreibung sowie den beigefügten Zeichnungen angegeben.

Bei einer bevorzugten Ausführungsform erfolgt das Öffnen, Schließen, Entriegeln und Verriegeln über ein Mehrgelenksystem, bevorzugt ein Viergelenksystem. Mit diesem System lässt sich auf einfache Weise ein synchroner Vorgang der Antriebskinematik, des z.B. Schließen und Verriegeln und Entriegeln und Öffnen einer Fahrzeugklappe, umsetzen.

In einer weiteren bevorzugten Ausführungsform wird die Antriebskinematik dabei von einem Antriebszylinder betätigt. Die Aktuierung des Antriebszylinders kann dabei elektrisch, pneumatisch oder hydraulisch erfolgen. Es ist jedoch auch denkbar, dass die Aktuierung mechanisch erfolgt.

In einer weiteren erfindungsgemäßen Ausgestaltung umfasst die Fahrzeugklappe einen Verriegelungsmechanismus, wobei der Verriegelungsmechanismus einen Eingriffselement und einen mit diesen zusammenwirkenden Gegeneingriffselement umfasst. In einer bevorzugten Ausführungsform ist der Eingriffselement direkt mit einer Fahrzeugverdeckklappe oder einer Klappenkinematik verbunden und das Gegeneingriffselement mit einem durch die Aktuatorik drehbaren Umlenkhebel.
Das Gegeneingriffselement kann alternativ auch integral mit dem Umlenkhebel ausgebildet sein.
Als Eingriffselement kann beispielsweise ein Haken ein Nocken, ein Federelement, oder ein Zapfen verstanden werden. Das Eingriffsgegenelement ist entsprechend dem Eingriffselement so ausgebildet, dass ein Zusammenwirken als Verriegelungsmechanismus gewährleistet ist.
Es kann natürlich jeder dem Fachmann bekannte Stand der Technik Verriegelungsmechanismus angewendet werden.

Gemäß der Erfindung ist das Mehrgelenksystem in einer ersten Funktionsstellung, in der der Verriegelungsmechanismus bei Erreichen der Übertotpunktlage des Mehrgelenksystems die Fahrzeugklappe verriegelt, und in eine zweite Funktionsstellung, in der die Fahrzeugklappe geöffnet ist, bringbar. Durch Erreichen der Übertotpunktlage erfolgt eine zusätzliche Verriegelung der Fahrzeugklappe. Es werden dadurch auch hohe Dichtungskräfte bei relativ schwachen Antrieb realisiert.
In einer weiteren Ausführungsform weist die Anordnung einen mechanischen Anschlag auf, an dem sich der Eingriffselement und der Umlenkhebel im geschlossenen Zustand der Fahrzeugklappe abstützen. Dadurch und aufgrund der Übertotpunktlage des Mehrgelenksystems, müssen vom Antriebszylinder keine permanenten Kräfte zum Halten des Verriegelungszustands aufgebracht werden.

Die Antriebskinematik ist bevorzugt über einen Antriebszylinder betätigbar. Der Antriebszylinder kann hierbei elektrisch, pneumatisch oder hydraulisch angetrieben werden.
Es versteht sich von selbst, dass für den Fachmann jeder dem Stand der Technik bekannte Antrieb verwendet werden kann.
Erfindungsgemäß wird der Umlenkhebel direkt durch die Aktuatorik angetrieben, wodurch ein einfacherer Aufbau der Antriebskinematik realisiert werden kann.

Die Fahrzeugklappe weist an der Karosserie einen definierten Drehpunkt auf. Der Drehpunkt dient zur Lagerung der Fahrzeugklappe sowie zur Aufnahme und Übertragung der an der Fahrzeugklappe auftretenden und wirkenden Kräfte auf die Karosserie.
Solche Kräfte treten beispielsweise beim Öffnen und Schließen der Fahrzeugklappe auf. Es wirken jedoch auch andere Kräfte wie z.B. der Fahrtwind auf die Fahrzeugklappe.

Die Anordnung umfasst einen Verriegelungsmechanismus, wobei der Verriegelungsmechanismus ein Eingriffselement und ein mit diesen zusammenwirkenden Eingriffsgegenelement umfasst, wobei das Eingriffselement als Haken und das Eingriffsgegenelement als Zapfen ausgebildet sein kann.

Erfindungsgemäß löst sich beim Verdrehen des Eingriffsgegenelements durch den drehbaren Umlenkhebel beim Öffnen der Fahrzeugklappe vom Eingriffselement. Das Eingriffsgegenelement ist dabei auf dem Umlenkhebel angeordnet und um einen gemeinsamen Drehpunkt drehbar. Aufgrund der Übertotpunktlage des Mehrgelenksystems, welches zwischen dem Antriebshebel und dem Umlenkhebel erreicht wird, wird die Fahrzeugklappe anfangs in die entgegengesetzte Öffnungsrichtung bewegt, wodurch die Kontaktkraft zwischen dem Eingriffsgegenelement und Eingriffselement minimiert und das Entriegeln der Anordnung erleichtert wird, da das Eingriffsgegenelement und das Eingriffselement in entgegengesetzter Richtung bewegbar sind. Im Idealfall findet ein lastfreies und reibungsloses Verriegeln und Entriegeln statt.

Vorzugsweise weist die Erfindung einen Bereich auf, der zum Fangen des Eingriffselements durch das Eingriffsgegenelement beim Verriegeln der Fahrzeugklappe definiert ist. Dieser Bereich erlaubt es, dass der Eingriffselement auch bei Toleranzfehlern vom Eingriffsgegenelement zuverlässig gefangen und in eine Verriegelungsposition gebracht wird.

In einer weiteren Ausführungsform der Erfindung ist eine Mindestlänge für einen wirksamen Hebel zum Verschließen der Fahrzeugklappe definiert. Ein entsprechend großer Hebelarm gewährleistet auch bei kleinen Aktuierungskräften des Antriebs ein zuverlässiges Verschließen der Fahrzeugklappe.

### Kurzbeschreibung der Zeichnungen

Die Erfindung wird im Folgenden beispielhaft unter Bezugnahme auf die Zeichnungen beschrieben.
- Fig. 1: ist eine perspektivische Ansicht der erfindungsgemäßen Anordnung einer Fahrzeugklappe.
- Fig. 2: ist eine weitere perspektivische Ansicht, wobei die Anordnung im verriegelten Zustand dargestellt ist.
- Fig. 3: ist eine Seitenansicht der Anordnung gemäß Fig. 2.
- Fig. 4: zeigt eine Seitenansicht der Anordnung im entriegelten Zustand.
- Fig. 5: ist eine perspektivische Ansicht der Anordnung in einer Zwischenstellung
- Fig. 6: ist eine Seitenansicht mit einer Darstellung der Hebelarmverhältnisse
- Fig. 7: eine weitere Seitenansicht mit einer Darstellung des Fangbereichs des Eingriffselements und dem zugehörigen Hebelarm

### Detaillierte Beschreibung der Erfindung

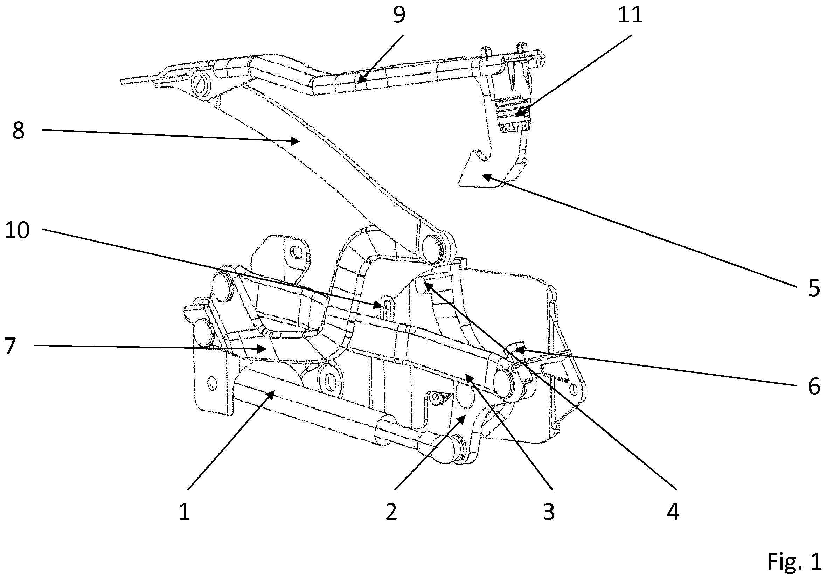

In Fig. 1 wird eine perspektivische Ansicht einer Anordnung dargestellt, wobei die Anordnung eine Fahrzeugklappe (nicht dargestellt) sowie ein Mehrgelenksystem, welche eine Aktuierungskinematik und eine Klappenkinematik aufweist. Die Anordnung umfasst auch einen Verriegelungsmechansimus sowie eine Aktuatorik 1 zum Antreiben der Aktuierungskinematik auf.

Die Aktuierungskinematik besteht aus dem Umlenkhebel 2, an dem ein Eingriffsgegenelement 4 angeordnet ist, sowie aus einem Antriebslenker 3. Die Klappenkinematik umfasst einen Zweischlaglenker 7, einen Lenker 8 sowie einen weiteren Lenker (nicht dargestellt) der am Lagerpunkt LP befestigt ist.

Der Antriebslenker 3 ist mit dem Zweischlaglenker 7 verbunden, wodurch die Aktuierungskinematik die Klappenkinematik betätigen kann. Die Aktuatorik 1, welche mit dem Umlenkhebel 2 direkt verbunden ist, verdreht den Umlenkhebel 2 bei Betätigung um einen Drehpunkt DP (in Fig. 1 nicht dargestellt). Auf dem Umlenkhebel 2 ist ein Eingriffsgegenelement 4 befestigt oder ausgeformt. Ein Antriebslenker 3, welcher mit dem Umlenkhebel 2 verbunden ist, wird bei Betätigung des Antriebszylinders 1 entsprechend der Bewegungsrichtung des Antriebszylinders 1 durch den Umlenkhebel 2 bewegt. Dabei steht der Umlenkhebel 2 in einer Übertotpunktlage zum Antriebslenker 3. Die Antriebskinematik ist, da sich der Umlenkhebel 2 in Öffnungsrichtung der Kinematik an einem mechanischen Anschlag 6 abstützt, verriegelt. Der Antriebslenker 3 der weiter mit einem Zweischlag 7 verbunden ist wird in einer Konsole in einer Führungsbahn 10 zwangsgeführt. Der Zweischlag 7 ist mit einem Lenker 8 gekoppelt, welcher wiederum mit einer Fahrzeugklappenaufnahme 9 verbunden ist. In der Fahrzeugklappenaufnahme 9 sind ein Eingriffselement 5 und ein Gummielement 11 integriert. Die Fahrzeugklappe ist mit der Fahrzeugklappenaufnahme 9 verbunden. Aufgrund des Systemaufbaus kann in einfacher Weise mit nur einer Antriebskinematik ein Öffnen und Schließen sowie ein Verriegeln und Entriegeln einer Fahrzeugklappe realisiert werden.

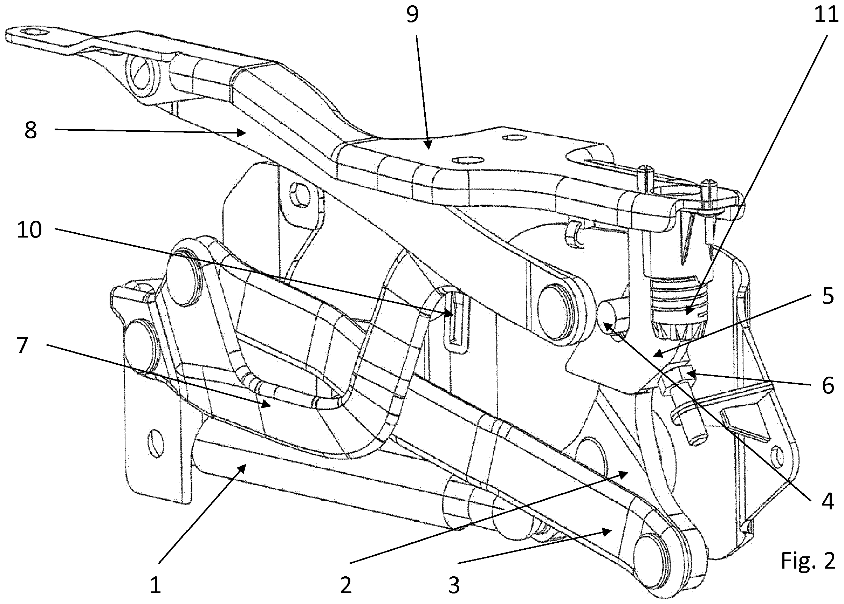

Fig. 2 zeigt eine perspektivische Ansicht, wobei die Anordnung im geschlossenen Zustand dargestellt ist. Das Eingriffselement 5 steht mit dem Eingriffsgegenelement 4 in einer Lage über einem Totpunkt im Eingriff. Dadurch wird ein Lösen des Verriegelungsmechanismus durch Vibrationen und Erschütterungen verhindert. Ein mechanischer Anschlag 6 verhindert eine weitere Auslenkung des Systems ("Überdrücken"), das Eingriffselement 5 und der Umlenkhebel 2 stützen sich im geschlossenen Zustand am mechanischen Anschlag 6 ab, dadurch müssen vom Antriebszylinder 1 keine permanenten Kräfte zum Halten des Verriegelungszustands aufgebracht werden.
Ein Gummielement 11 dient beim Schließen der Fahrzeugklappe zum Dämpfen und Vermeiden einer Geräuschentwicklung.

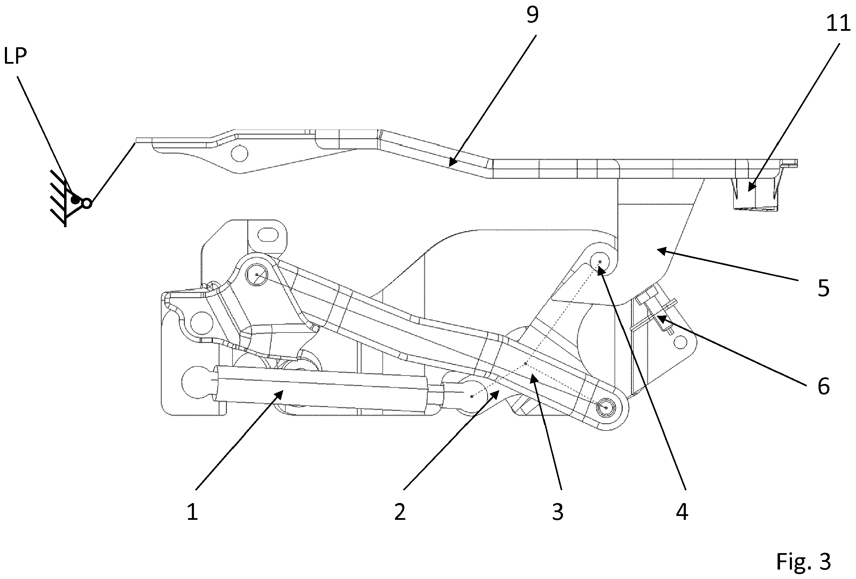

In Fig. 3 wird eine Seitenansicht der in Fig. 2 beschriebenen Anordnung dargestellt. Schematisch wird die Anbindung der Anordnung an eine Karosserie (nicht dargestellt) über den Lagerpunkt LP dargestellt.

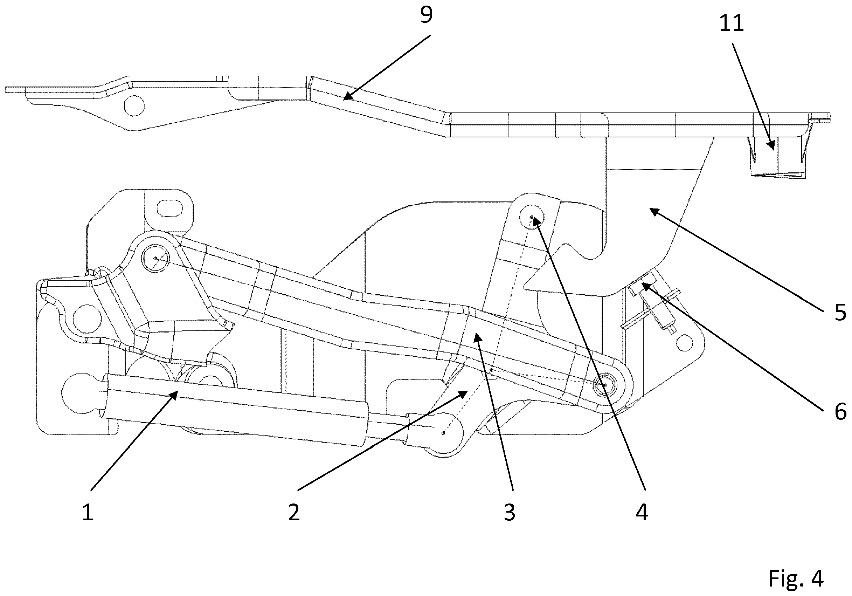

Fig. 4 zeigt eine Ansicht der Anordnung im entriegelten Zustand. Das Eingriffsgegenelement 4 ist vom Eingriffselement 5 gelöst. Bei einer weiteren Betätigung des Antriebszylinders 1 wird die Fahrzeugklappe in einen geöffneten Zustand gebracht. Der Zweischlag 7 und der Lenker 8 sind zur besseren Übersichtlichkeit nicht dargestellt.

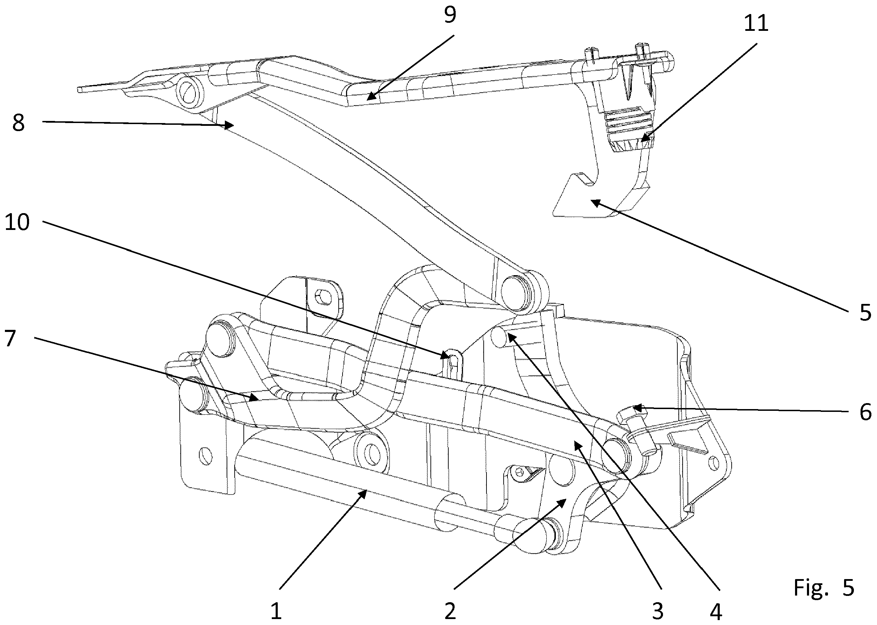

In einer perspektivischen Ansicht wird eine Zwischenposition der Anordnung in Fig. 5 dargestellt. Erfindungsgemäß erfolgt das Entriegeln und Verriegeln sowie Öffnen und Schließen der Fahrzeugklappe mittels einer Antriebskinematik schnell und zuverlässig.

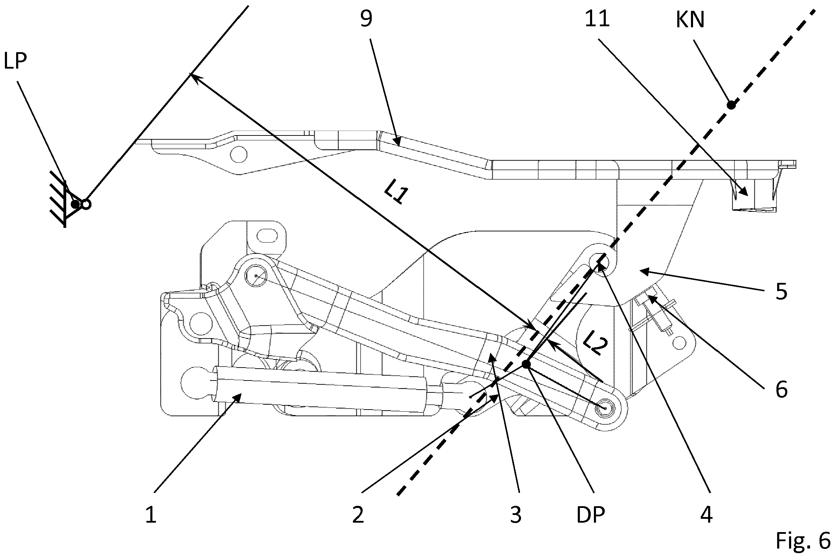

Fig. 6 zeigt dass beim Schließen einer Fahrzeugklappe (nicht dargestellt) zwischen der Kontaktnormale KN und dem Lagerpunkt LP an der Karosserie ein großer Hebelarm L1 wirkt. Dadurch sind relativ kleine Schließkräfte zum Schließen der Fahrzeugklappe erforderlich. Der Abstand L2 der Kontaktnormale KN zum Drehpunkt DP ermöglicht das Erreichen einer Übertotpunktlage des Verriegelungsmechansimus, wodurch keine weiteren Kräfte zum Halten der Verriegelung erforderlich sind.
Der Umlenkhebel 2 wird dabei vom Antriebszylinder 1 über den Drehpunkt DP verschwenkt wodurch in weiterer Folge das Eingriffsgegenelement 4 welcher auf dem Umlenkhebel 2 angeordnet ist, sowie den Antriebslenker 3, der den Zweischlag 7 und den Lenker 8 (7 und 8 nicht dargestellt) sowie der Fahrzeugklappenaufnahme 9 entsprechend der Antriebskinematik in die Schließstellung bewegt.

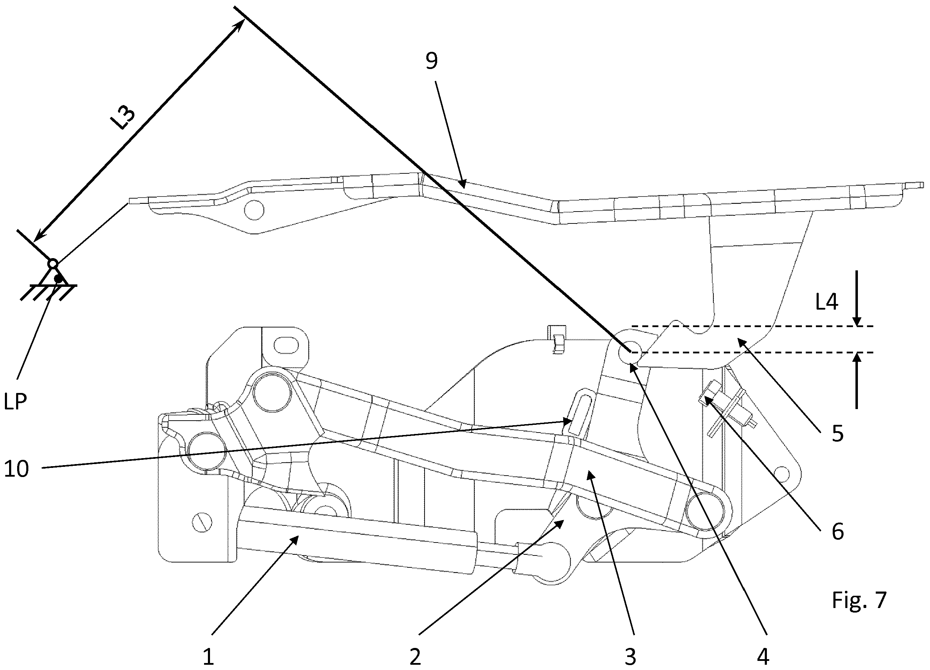

Der Fangbereich L4 des Eingriffselements 5 wird in Fig. 7 dargestellt. Die Fahrzeugklappe bleibt aufgrund von Widerständen wie innere Reibung, Dichtung und Fahrtwiderstand stehen, während die Kinematik weiter verfährt. Der Kontaktbereich des Eingriffsgegenelements 4 und Eingriffselement 5 sind so ausgeführt, dass die Fahrzeugklappe ab den Fangbereich L4 zugezogen wird, wobei ein ausreichend großer Hebelarm L3 wirksam ist, wodurch kleine Kräfte zum Verschließen der Fahrzeugklappe benötigt werden.

### Bezugszeichenliste

- 1: Aktuator
- 2: Umlenkhebel
- 3: Antriebslenker
- 4: Eingriffsgegenelement
- 5: Eingriffselement
- 6: Anschlag
- 7: Zweischlaglenker
- 8: Lenker
- 9: Fahrzeugklappenaufnahme
- 10: Führungsbahn
- 11: Gummielement

- LP: Lagerpunkt
- DP: Drehpunkt
- L1: Hebelarm
- L2: Abstand
- L3: Hebelarm
- L4: Fangbereich
- KN: Kontaktnormale

## Patentansprüche

1. Anordnung zum Öffnen, Schließen, Entriegeln und Verriegeln einer Fahrzeugklappe, wobei ein Antriebslenker (3) einer Aktuierungskinematik mit einem Umlenkhebel (2) mit einem Eingriffsgegenelement (4) und dem Antriebslenker (3) an einer Klappenkinematik mit einem Zweischlaglenker (7) und
einem Lenker (8) angreift, wobei der Umlenkhebel (2) der Aktuierungskinematik
von einem Aktuator (1) antreibbar ist, **dadurch gekennzeichnet, dass** die Umlenkhebel (2) bei einer Schließbewegung in ein Eingriffselement (5) der Klappenkinematik oder der Fahrzeugklappe eingreift und diese dabei schließt und verriegelt, wobei der Umlenkhebel (2) in einer Übertotpunktlage zum Antriebslenker (3) steht.

2. Anordnung nach Anspruch **1**,
**dadurch gekennzeichnet, dass** das Öffnen, Schließen, Entriegeln und Verriegeln der Fahrzeugklappe über ein Mehrgelenksystem erfolgt.

3. Anordnung nach Anspruch **1**,
**dadurch gekennzeichnet, dass** der Aktuator (1) ein Antriebszylinder ist, welcher elektrisch, pneumatisch oder hydraulisch angetrieben wird.

4. Anordnung nach Anspruch **1**,
**dadurch gekennzeichnet, dass** der Umlenkhebel (2) durch den Aktuator (1) direkt antreibbar ist.

5. Anordnung nach Anspruch 1,
**dadurchg gekennzeichnet**, dass die Fahrzeugklappe an einen definierten Lagerpunkt (LP) an einer Karosserie gelagert ist.

6. Anordnung nach Anspruch 1,
**dadurch gekennzeichnet, dass** die Anordnung einen Verriegelungsmechanismus umfasst, wobei der Verriegelungsmechanismus ein Eingriffselement (5) und ein mit diesen zusammenwirkenden Eingriffsgegenelement (4) umfasst.

7. Anordnung nach Anspruch 6,
**dadurch gekennzeichnet, dass** das Eingriffselement (5) ein Haken, und das Eingriffsgegenelement (4) ein Zapfen ist.

8. Anordnung nach Anspruch 2,
**dadurch gekennzeichnet, dass** das Mehrgelenksystem in eine erste Funktionsstellung, in welcher der Verriegelungsmechanismus bei Erreichen der Übertotpunktlage des Mehrgelenksystems die Fahrzeugklappe verriegelt, und in eine zweite Funktionsstellung, in der die Fahrzeugklappe geöffnet ist, bringbar ist.

9. Anordnung nach Anspruch 1,
**dadurch gekennzeichnet, dass** sich das Eingriffsgegenelement (4) beim Öffnen der Fahrzeugklappe durch Verdrehen des Umlenkhebels (2), und wobei das Mehrgelenksystem anfangs stärker in Übertotpunktlage bewegt wird, lastfrei und reibungslos löst.

10. Anordnung nach Anspruch 9,
**dadurch gekennzeichnet, dass** das Ein-griffsgegenelement (4) mit dem Umlenkhebel (2) um einen Drehpunkt (DP) drehbar ist.

11. Anordnung nach Anspruch 1,
**dadurch gekennzeichnet, dass** die Anordnung einen mechanischen Anschlag (6) aufweist, an dem sich das Eingriffselement (4) im geschlossenem Zustand der Fahrzeugklappe abstützt.

12. Anordnung nach Anspruch 6,
**dadurch gekennzeichnet, dass** der Verriegelungsmechanismus einen Fangbereich (L4) für das Eingriffselement (5) aufweist.

13. Anordnung nach Anspruch 5 und 7,
**dadurch gekennzeichnet, dass** der Abstand zwischen dem Lagerpunkt (LP) und dem Mittelpunkt des Zapfens als Eingriffsgegenelement (4) eine Mindestlänge für einen wirksamen Hebelarm (L3) zum Verschließen der Fahrzeugklappe aufweist.

## Claims

1. Arrangement for opening, closing, unlocking and locking a vehicle flap, wherein a drive link (3) of actuating kinematics having a defecting lever (2) with a mating engagement element (4) and the drive link (3) acts on flap kinematics with a crank link (7) and a link (8), wherein the deflecting lever (2) of the actuating kinematics is drivable by an actuator (1) **characterized in that** the deflecting lever (2), during a closing movement, engages in an engagement element (5) of the flap kinematics or of the vehicle flap and, in the process, closes and locks the latter, wherein the deflecting lever (2) is in a position beyond the dead centre with respect to the drive link (3).

2. Arrangement according to Claim 1, **characterized in that** the vehicle flap is opened, closed, unlocked and locked via a multi-bar system.

3. Arrangement according to Claim 1, **characterized in that** the actuator (1) is a drive cylinder which is driven electrically, pneumatically or hydraulically.

4. Arrangement according to Claim 1, **characterized in that** the deflecting lever (2) is directly drivable by the actuator (1).

5. Arrangement according to Claim 1, **characterized in that** the vehicle flap is mounted on a body at a defined bearing point (LP).

6. Arrangement according to Claim 1, **characterized in that** the arrangement comprises a locking mechanism, wherein the locking mechanism comprises an engagement element (5) and a mating engagement element (4) interacting with the latter.

7. Arrangement according to Claim 6, **characterized in that** the engagement element (5) is a hook, and the mating engagement element (4) is a pin.

8. Arrangement according to Claim 2, **characterized in that** the multi-bar system is bringable into a first functional position, in which the locking mechanism locks the vehicle flap when the multi-bar system reaches the position beyond the dead centre, and into a second functional position, in which the vehicle flap is open.

9. Arrangement according to Claim 1, **characterized in that**, during the opening of the vehicle flap, the mating engagement element (4) is released in a load-free and frictionless manner by rotation of the deflecting lever (2), and wherein the multi-bar system is initially moved more powerfully into the position beyond the dead centre.

10. Arrangement according to Claim 9, **characterized in that** the mating engagement element (4) is rotatable with the deflecting lever (2) about a pivot point (DP).

11. Arrangement according to Claim 1, **characterized in that** the arrangement has a mechanical stop (6) on which the engagement element (4) is supported in the closed state of the vehicle flap.

12. Arrangement according to Claim 6, **characterized in that** the locking mechanism has a catch region (L4) for the engagement element (5).

13. Arrangement according to Claims 5 and 7, **characterized in that** the distance between the bearing point (LP) and the centre point of the pin of the mating engagement element (4) has a minimum length for an effective lever arm (L3) for closing the vehicle flap.

## Revendications

1. Dispositif d'ouverture, de fermeture, de déverrouillage et de verrouillage d'un capot de véhicule, un bras d'entraînement (3) d'une cinématique d'actionnement, qui comporte un levier de renvoi (2) pourvu d'un contre-élément d'engagement (4) et du bras d'entraînement (3), s'engageant avec une cinématique de capot qui comprend un double bras d'impact (7) et un bras (8), le levier de renvoi (2) de la cinématique d'actionnement pouvant être entraîné par un actionneur (1), **caractérisé en ce que** le levier de renvoi (2) s'engage, lors d'un mouvement de fermeture, dans un élément d'engagement (5) de la cinématique de capot ou du capot de véhicule et ferme et verrouille celui-ci, le levier de renvoi (2) étant dans une position de point mort supérieur par rapport au bras d'entraînement (3).

2. Dispositif selon la revendication 1,
**caractérisé en ce que** l'ouverture, la fermeture, le déverrouillage et le verrouillage du capot de véhicule sont effectués par le biais d'un système à articulations multiples.

3. Dispositif selon la revendication 1,
**caractérisé en ce que** l'actionneur (1) est un cylindre d'entraînement entraîné électriquement, pneumatiquement ou hydrauliquement.

4. Dispositif selon la revendication 1,
**caractérisé en ce que** le levier de renvoi (2) peut être entraîné directement par l'actionneur (1).

5. Dispositif selon la revendication 1,
**caractérisé en ce que** le capot de véhicule est monté sur un point d'appui défini (LP) au niveau d'une carrosserie.

6. Dispositif selon la revendication 1,
**caractérisé en ce que** le dispositif comprend un mécanisme de verrouillage, le mécanisme de verrouillage comprenant un élément d'engagement (5) et un contre-élément d'engagement (4).

7. Dispositif selon la revendication 6,
**caractérisé en ce que** l'élément d'engagement (5) est un crochet et le contre-élément d'engagement (4) est un téton.

8. Dispositif selon la revendication 2,
**caractérisé en ce que** le système à articulations multiples peut être amené dans une première position fonctionnelle, dans laquelle le mécanisme de verrouillage verrouille le capot de véhicule lorsque la position de point mort supérieur du système à articulations multiples est atteinte, et dans une deuxième position fonctionnelle dans laquelle le capot de véhicule est ouvert.

9. Dispositif selon la revendication 1,
**caractérisé en ce que** le contre-élément d'engagement (4) se détache sans contrainte ni friction lors de l'ouverture du capot de véhicule par rotation du levier de renvoi (2), le système à articulations multiples étant déplacé au début plus fortement dans la position de point mort supérieur.

10. Dispositif selon la revendication 9,
**caractérisé en ce que** le contre-élément d'engagement (4) pourvu du levier de renvoi (2) est rotatif sur un point de rotation (DP).

11. Dispositif selon la revendication 1,
**caractérisé en ce que** le dispositif comporte une butée mécanique (6) sur laquelle l'élément d'engagement (4) s'appuie lorsque le capot de véhicule est fermé.

12. Dispositif selon la revendication 6,
**caractérisé en ce que** le mécanisme de verrouillage comporte une zone d'accrochage (L4) destinée à l'élément d'engagement (5).

13. Dispositif selon les revendications 5 et 7,
**caractérisé en ce que** la distance entre le point d'appui (LP) et le centre du téton utilisé comme contre-élément d'engagement (4) a une longueur minimale pour qu'un bras de levier efficace (L3) ferme le capot de véhicule.
